# EUROPEAN PATENT APPLICATION

(11) **EP 4 578 541 A1**
(43) Date of publication of application: **02.07.2025**
(21) Application number: 23857637.5
(22) Date of filing: 16.08.2023
(51) Int. Cl.: B01J 8/44, B01J 8/18, C01D 15/02, C01D 15/08, H01M 10/54

(54) **FLUIDIZED BED REACTOR AND METHOD FOR RECOVERING ACTIVE METAL OF LITHIUM SECONDARY BATTERY USING SAME**

(30) Priority: 23.08.2022 KR 20220105530
(71) Applicant: SK innovation Co., Ltd., Seoul 03188 (KR)
(72) Inventor: HONG, Suk Joon, Daejeon 34124 (KR); SON, Sung Real, Daejeon 34124 (KR); KIM, Ji Min, Daejeon 34124 (KR); KIM, Hyeon Jung, Daejeon 34124 (KR)
(74) Representative: Thoma, Michael
(86) International application number: PCT/KR2023/012114
(87) International publication number: WO 2024/043603

(57) **Abstract**

A fluidized bed reactor according to exemplary embodiments of the present invention may include: a reactor body; a dispersion plate which includes a base plate and first injection columns protruding from an upper surface of the base plate; and a second injection column which is configured to inject a gas so as to form a gas flow which rotates along an inner surface of the reactor body.

## Description

### [Technical Field]

The present invention relates to a fluidized bed reactor and a method for recovering an active metal from a lithium secondary battery using the same, and more specifically, to a fluidized bed reactor which includes a dispersion plate and a method for recovering an active metal from a lithium secondary battery using the fluidized bed reactor.

### [Background Art]

Recently, a secondary battery has been developed and widely applied to portable electronic telecommunication devices such as a camcorder, a mobile phone, a laptop computer, etc., and vehicles such as a hybrid vehicle and an electric electric vehicle as a power source thereof. As the secondary battery, a lithium secondary battery has a high operating voltage and a high energy density per unit weight, and is advantageous in terms of a charging speed and light weight, such that development and application thereof have been proceeded in this regard.

A lithium metal oxide may be used as a cathode active material of the lithium secondary battery. The lithium metal oxide may contain transition metals such as nickel, cobalt or manganese.

As the above-described expensive valuable metals are used for the cathode active material, 20% or more of manufacturing costs of the lithium secondary battery is required to manufacture the cathode material. In addition, as the environmental protection issues are recently emerging, research on a method for recycling the cathode active material is being conducted.

Conventionally, a wet method for sequentially recovering valuable metals by leaching a waste cathode active material in a strong acid such as sulfuric acid has been used, but the wet method is disadvantageous in terms of regeneration selectivity, regeneration time, etc., and may cause environmental pollution. Therefore, a method for recovering valuable metals by using a dry-based reaction through contact them with a reaction gas is being studied.

However, as a size of the cathode active material particles supplied for the dry reaction becomes finer, unevenness of the reaction due to agglomeration may occur. In addition, a recovery rate of the active material may be decreased due to local uneven supply of a reaction gas within the reactor.

For example, Korean Patent Registration No. 10-0843601 discloses a fluidized bed reactor including a tubyere-type dispersion plate. However, in the fluidized bed reactor, a dead zone where the gas injected from the tubyeres does not reach is formed in a region away from the tubyeres (e.g., an outer portion of the dispersion plate).

### [Summary of Invention]

### [Problems to be Solved by Invention]

An object of the present invention is to provide a fluidized bed reactor having improved reaction efficiency and reliability.

Another object of the present invention is to provide a method for recovering an active metal of a lithium secondary battery using the fluidized bed reactor.

### [Means for Solving Problems]

To achieve the above objects, according to an aspect of the present invention, there is provided a fluidized bed reactor including: a reactor body; a dispersion plate which is coupled to a lower portion of the reactor body, and includes a base plate and first injection columns protruding from an upper surface of the base plate; and a second injection column which is adjacent to a circumference of the dispersion plate, and is configured to inject a gas so as to form a gas flow which rotates along an inner surface of the reactor body.

In one embodiment, the gas flow formed by the second injection column may rotate in unidirection.

In one embodiment, a plurality of the second injection columns may be disposed spaced apart along the circumference of the dispersion plate.

In one embodiment, if a length of the circumference of the dispersion plate may be defined as L, and the number of the second injection columns is defined as n, the second injection columns may be disposed spaced apart from each other at an interval of L/(n+1) to L/(n-1).

In one embodiment, the fluidized bed reactor may further include a gas passage configured to supply the gas to the second injection column.

In one embodiment, the second injection column may further include: a gas reception part configured to receive the gas from the gas passage, and a second injection port configured to inject the gas so that the gas is circulated in a direction parallel to the upper surface of the base plate at an inside of the reactor body.

In one embodiment, the gas reception part may be in contact with the upper surface of the base plate.

In one embodiment, the gas reception part may be in contact with the inner surface of the reactor body.

In one embodiment, the second injection port may be parallel to a tangential direction of the dispersion plate.

In one embodiment, the second injection port may be inclined toward the inner surface of the reactor body.

In one embodiment, the first injection column may further include a column body which extends from the upper surface of the base plate, a cap part which covers an upper portion of the column body, and a first injection port which penetrates the column body.

In one embodiment, the first injection port may be inclined toward the upper surface of the base plate.

In one embodiment, the first injection columns may be arranged at a predetermined pitch or in a predetermined grid shape.

In one embodiment, the reactor body may further include a reaction gas passage configured to supply a reaction gas from a bottom portion of the base plate.

According to another aspect of the present invention, there is provided a method for recovering an active metal of a lithium secondary battery, including: preparing a waste cathode active material mixture obtained from a waste cathode of the lithium secondary battery; reacting the waste cathode active material mixture in the above-described fluidized bed reactor to form a preliminary precursor mixture; and selectively recovering a lithium precursor from the preliminary precursor mixture.

### [Advantageous effects]

The fluidized bed reactor according to exemplary embodiments of the present invention may prevent an occurrence of a dead zone where the reaction gas does not reach in the dispersion plate. Accordingly, uniform reaction region and fluidized bed may be formed.

The fluidized bed reactor according to exemplary embodiments may be used in a recycling process through hydrogen reduction of the cathode active material of the lithium secondary battery. The fluidized bed reactor may form the uniform reaction region and fluidized bed, thereby increasing a recovery efficiency of the cathode active material.

### [Brief Description of Drawings]

FIG. 1 is a schematic view for describing the internal structure of a fluidized bed reactor according to exemplary embodiments of the present invention.
FIG. 2 is a schematic plan view illustrating a dispersion plate according to exemplary embodiments.
FIG. 3 is a schematic cross-sectional view of the dispersion plate of FIG. 2 taken on line II-II' in the arrow direction.
FIG. 4 is a schematic perspective view illustrating a second injection column according to exemplary embodiments.
FIG. 5 is a plan view illustrating the internal structure of the fluidized bed reactor by taking the fluidized bed reactor of FIG. 1 on line I-I' in the arrow direction.
FIGS. 6 and 7 are schematic views for describing the arrangement structure of the second injection column according to some exemplary embodiments.
FIGS. 8 and 9 are schematic views for describing the formation direction of a second injection port according to some exemplary embodiments.
FIG. 10 is a schematic view for describing a method for recovering an active metal of a lithium secondary battery using a fluidized bed reactor according to exemplary embodiments.

### [Mode for Carrying out Invention]

According to exemplary embodiments of the present invention, a fluidized bed reactor capable of forming uniform reaction region and fluidized bed may be provided.

In addition, according to exemplary embodiments of the present invention, a dry-based method for recovering an active metal from a lithium secondary battery with high purity and high yield using the fluidized bed reactor may be provided.

Hereinafter, exemplary embodiments of the present invention will be described in detail with reference to the accompanying drawings. However, these embodiments are merely an example, and the present invention is not limited to the specific embodiments described as the example.

As used herein, the term "precursor" is used to comprehensively refer to a compound including specific metals to provide the specific metals included in the electrode active material.

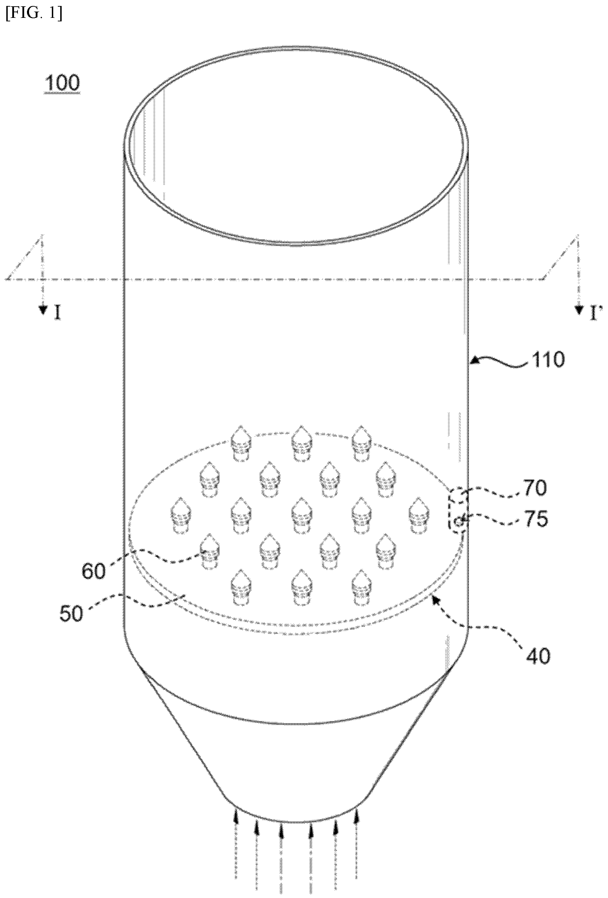

FIG. 1 is a schematic view for describing the internal structure of a fluidized bed reactor according to exemplary embodiments of the present invention.

Referring to FIG. 1, a fluidized bed reactor 100 may include a reactor body 110 and a dispersion plate 40.

The reactor body 110 may extend from a lower end to an upper end of the fluidized bed reactor 100, and may include a hollow portion formed inside the reactor body 110. The hollow portion may be partitioned by the dispersion plate 40.

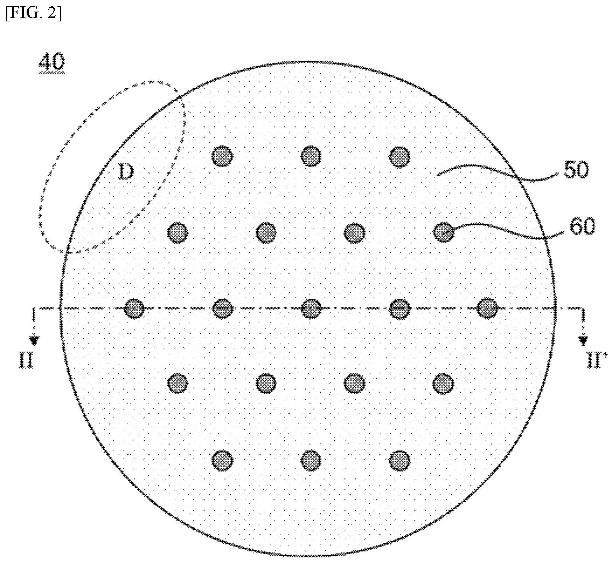

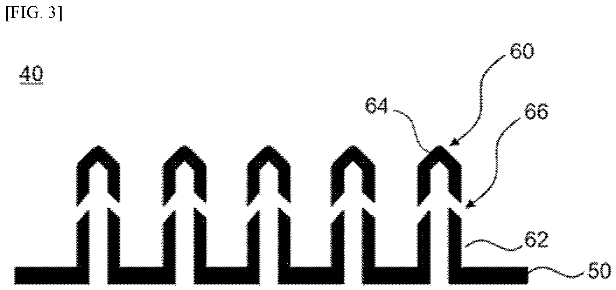

FIG. 2 is a schematic plan view illustrating the dispersion plate according to exemplary embodiments. In addition, FIG. 3 is a schematic cross-sectional view of the dispersion plate of FIG. 2 taken on line II-II' in the arrow direction.

Referring to FIGS. 2 and 3, the dispersion plate 40 may include a base plate 50 and a plurality of first injection columns 60 protruding from the base plate 50.

For example, the base plate 50 may be a circular or polygonal plate made of a metal or ceramic material.

The first injection columns 60 may have a shape protruding upwardly from an upper surface of the base plate 50. The first injection columns 60 may be regularly arranged on the upper surface of the base plate 50 in a predetermined arrangement form (e.g., predetermined grid arrangement) with an array pitch for uniform diffusion and distribution of the reaction gas.

For example, the injection columns 60 and 70 may have an arrangement form or a grid form arranged at vertices of a polygon such as a triangle, a square or a hexagon. For example, as shown in FIG. 2, the first injection columns 60 may be arranged according to an equilateral triangular pitch.

Referring to FIG. 3, each of the first injection columns 60 may include a column body 62, a cap part 64 and a first injection port 66 penetrating the first column body 62. For example, the first injection columns 60 may have a bubble cap or a tubyere structure.

For example, as shown in FIG. 3, the first injection port 66 may be formed to be inclined from an upper portion of the injection column 60 toward the base plate 50. For example, the first injection port 66 may have a shape extending from the upper portion of the injection column 60 toward the base plate 50.

In one embodiment, an inclination angle between a vertical direction from the upper surface of the base plate 50 and the first injection ports 66 may be about 30° to 60°.

As the first injection ports 66 are formed to be inclined with respect to the upper surface of the base plate 50, the reaction gas may be injected so as to spread toward the base plate 50. Accordingly, a formation of a fluidized layer may be facilitated while a reactive material (e.g., precursor particles or active material particles) settling on the upper surface of the base plate 50 rises.

As described above, when the first injection columns 60 are arranged on the base plate 50 according to a predetermined pitch (e.g., a triangular arrangement), a region where the injection columns 60 are not arranged at a predetermined interval may occur in a peripheral portion or outer portion of the base plate 50. Accordingly, as indicated by the dotted oval in FIG. 2, a dead zone (D) where the reaction gas does not reach may occur.

In this case, the reaction gas may not reach an inner surface of the reactor body 110, such that the fluidized bed may not be uniformly formed. In addition, reactive material particles which are aggregated on the inner surface of the reactor body 110 may stick thereto, thereby reducing a reaction yield.

However, as shown in FIG. 1, the fluidized bed reactor 100 according to exemplary embodiments of the present invention may include a second injection column 70 disposed adjacent to a circumference of the dispersion plate 40, thereby suppressing a formation of the dead zone D.

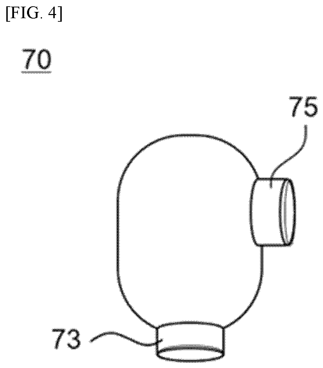

FIG. 4 is a schematic perspective view illustrating the second injection column according to exemplary embodiments.

Referring to FIG. 4, the second injection column 70 may include, for example, a gas reception part 73 configured to receive a gas supplied from a gas passage 104 to be described below, and a second injection port 75 configured to inject the gas so that the gas is circulated in a direction parallel to the upper surface of the base plate at an inside of the reactor body 110.

In one embodiment, the gas may include a carrier gas and/or a reaction gas to be described below.

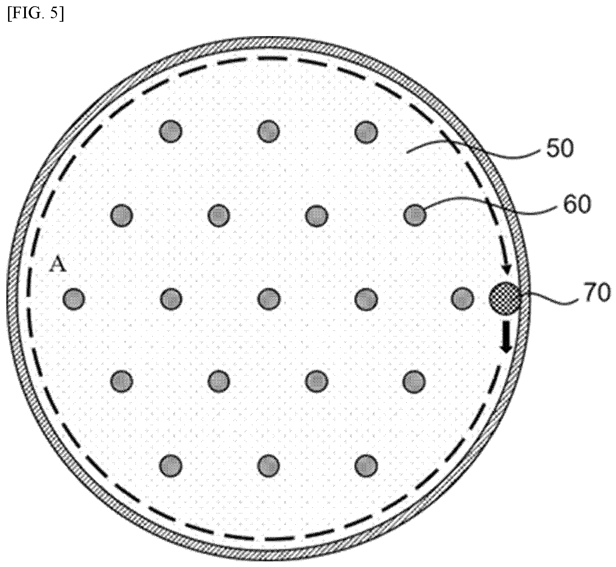

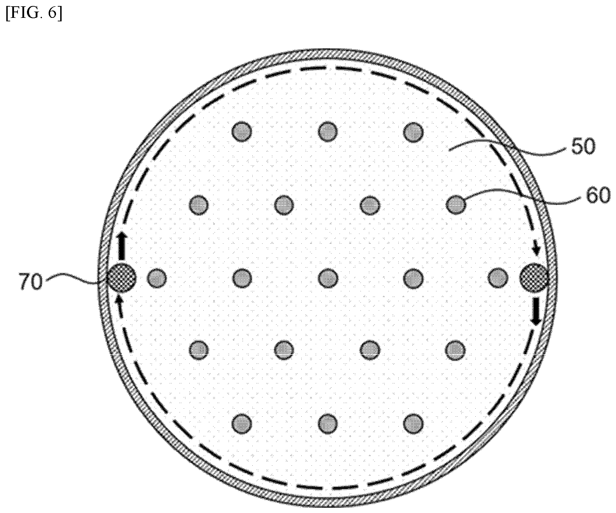

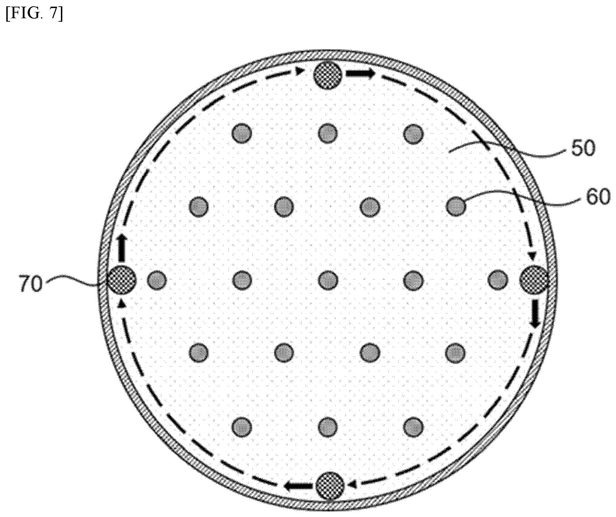

FIG. 5 is a plan view illustrating the internal structure of the fluidized bed reactor taken on line I-I' of FIG. 1 and observed in the arrow direction. In addition, FIGS. 6 and 7 are schematic views for describing the arrangement structure of the second injection column according to some exemplary embodiments.

As shown in FIG. 5, the gas injected from the second injection column 70 may form a gas flow which rotates along the inner surface of the reactor body 110. Accordingly, the formation of the dead zone D may be suppressed.

In one embodiment, the gas injected from the second injection column 70 may form a gas flow which rotates in unidirection. Accordingly, a whirl in unidirection may be induced, thereby more uniformly dispersing the reactive material (e.g., precursor particles or active material particles).

As shown in FIGS. 6 and 7, the fluidized bed reactor 100 may include a plurality of second injection columns 70. The plurality of second injection columns may be disposed spaced apart from each other along the circumference of the dispersion plate 40.

For example, if a length of the circumference of the dispersion plate 40 is defined as L, and the number of the second injection columns is defined as n, the second injection columns may be disposed spaced apart from each other at an interval of L/(n+1) to L/(n-1).

For example, as shown in FIG. 6, two second injection columns may be disposed along the circumference of the dispersion plate 40 at an interval of L/2. Alternatively, as shown in FIG. 7, four second injection columns may be disposed along the circumference of the dispersion plate 40 at an interval of L/4. In this case, the whirl may be better formed.

In one embodiment, the gas reception part 73 may be in contact with the upper surface of the base plate 50. The gas passage 104 may penetrate the base plate 50 to be connected to the gas reception part 73, thereby supplying the gas.

In one embodiment, the gas reception part 73 may be in contact with the inner surface of the reactor body 110. The gas passage 104 may penetrate the reactor body 110 to be connected to the gas reception part 73, thereby supplying the gas.

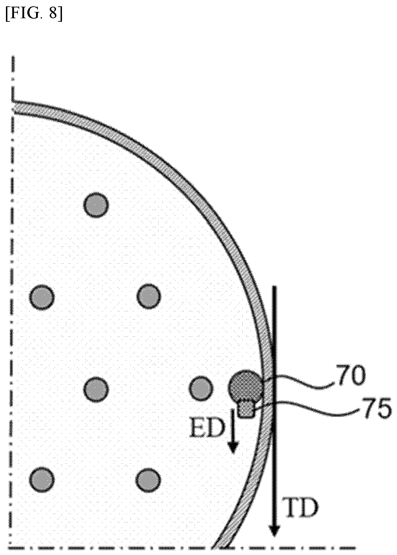

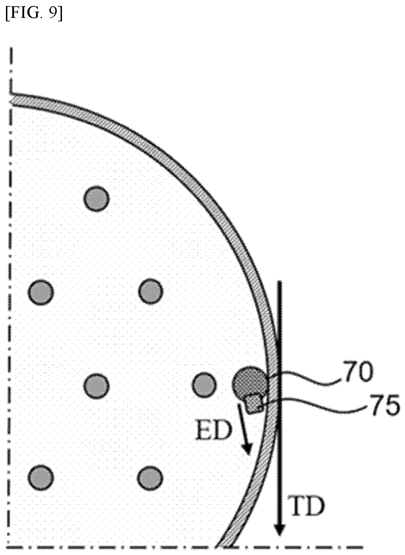

FIGS. 8 and 9 are schematic views for describing a formation direction ED of the second injection port according to some embodiments.

In one embodiment, as shown in FIG. 8, the second injection port 75 may be formed parallel to the tangential direction TD of the dispersion plate 40.

In one embodiment, as shown in FIG. 9, the second injection port 75 may be formed to be inclined toward the inner surface of the reactor body 110.

In some embodiments, an inclination angle between the tangential direction TD and the second injection port 75 may be 0° to 30°, 0° to 20°, or 0° to 10°.

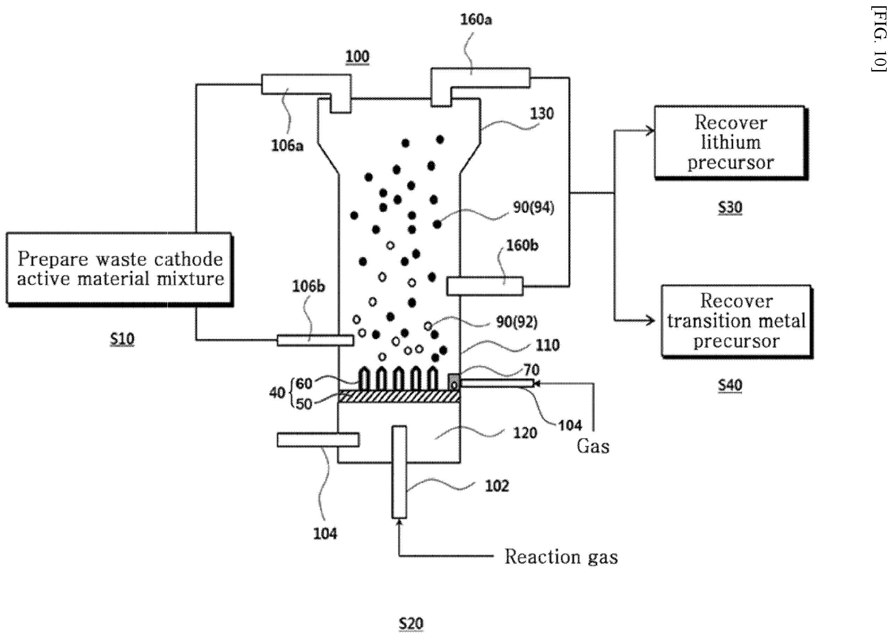

FIG. 10 is a schematic view for describing a method for recovering an active metal from a lithium secondary battery using the fluidized bed reactor 100 according to exemplary embodiments.

Hereinafter, the method for recovering an active metal from a lithium secondary battery and the configuration/structure of the above-described fluidized bed reactor 100 will be described together with reference to FIG. 10.

Referring to FIG. 10, a waste cathode active material mixture may be prepared from a waste cathode of a lithium secondary battery (e.g., process S10).

The lithium secondary battery may include an electrode assembly including a cathode, an anode and a separation member interposed between the cathode and the anode. The cathode and the anode may include a cathode active material layer and an anode active material layer coated on a cathode current collector and an anode current collector, respectively.

For example, a cathode active material included in the cathode active material layer may include a lithium metal oxide containing lithium and a transition metal.

In some embodiments, the lithium metal oxide may be represented by Formula 1 below.

[Formula 1] LiₓM1ₐM2₆M3_{c}O_{y}

In Formula 1, M1, M2, and M3 may be selected from Ni, Co, Mn, Na, Mg, Ca, Ti, V, Cr, Cu, Zn, Ge, Sr, Ag, Ba, Zr, Nb, Mo, Al, Ga or B. In the Formula 1, x, y, a, b and c may satisfy 0<x≤1.1, 2≤y≤2.02, 0<a<1, 0<b<1, 0<c<1, 0<a+b+c≤1.

In some embodiments, the cathode active material may be an NCM-based lithium oxide including nickel, cobalt and manganese.

The cathode may be separated from the waste lithium secondary battery to recover a waste cathode. The waste cathode includes the cathode current collector (e.g., aluminum (Al)) and the cathode active material layer as described above, and the cathode active material layer may include a conductive material and a binder together with the above-described cathode active material.

The conductive material may include, for example, a carbon-based material such as graphite, carbon black, graphene, carbon nanotube or the like. The binder may include, for example, a resin material such as vinylidene fluoride-hexafluoropropylene copolymer (PVDF-co-HFP), polyvinylidene fluoride (PVDF), polyacrylonitrile, polymethyl methacrylate or the like.

According to exemplary embodiments, the recovered waste cathode may be pulverized to produce a waste cathode active material mixture. Accordingly, the waste cathode active material mixture may be manufactured in the form of powder. The waste cathode active material mixture includes powder of a lithium-transition metal oxide as described above, and may include, for example, the NCM-based lithium metal oxide powder.

As used herein, the term "waste cathode active material mixture" may refer to a raw material which is input into a fluidized bed reaction treatment to be described below after the cathode current collector is substantially removed from the waste cathode. In one embodiment, the waste cathode active material mixture may include cathode active material particles such as the NCM-based lithium oxide. In one embodiment, the waste cathode active material mixture may also include some components derived from the binder or the conductive material. In one embodiment, the waste cathode active material mixture may be substantially composed of the cathode active material particles.

In some embodiments, the waste cathode active material mixture may have an average particle diameter (D50) of 5 to 100 µm. Within the above range, the lithium-transition metal oxide such as Li(NCM)O₂ to be recovered may be easily separated from the cathode current collector, the conductive material and the binder included in the waste cathode active material mixture.

In some embodiments, the waste cathode active material mixture may be subjected to heat treatment before inputting it into the fluidized bed reactor to be described below. By the heat treatment, impurities such as the conductive material and the binder included in the waste cathode active material mixture may be removed or reduced, such that the lithium-transition metal oxide may be introduced into the fluidized bed reactor with high purity.

The heat treatment may be performed at a temperature of, for example, about 100°C to 500°C, or about 350°C to 450°C. Within the above range, while the impurities may be substantially removed, decomposition and damage of the lithium-transition metal oxide may be prevented.

For example, in process S20, the waste cathode active material mixture may be reacted in the fluidized bed reactor 100 to form a preliminary precursor mixture 90.

As shown in FIG. 10, the fluidized bed reactor 100 may be divided into the reactor body 110, a reactor lower portion 120 and a reactor upper portion 130.

The reactor body 110 may include a heating means such as a heater or may be integrally formed with the heating means.

The dispersion plate 40 may be coupled to the lower portion of the reactor body 110. A bottom portion of the dispersion plate 40 in the reactor body 110 may be defined as the reactor lower portion 120.

The waste cathode active material mixture may be supplied into the reactor body 110 through supply passages 106a and 106b. The waste cathode active material mixture may be dropped through a first supply passage 106a connected to the reactor upper portion 130, or may be input through a second supply passage 106b connected to the lower portion of the reactor body 110. In one embodiment, the first and second supply passages 106a and 106b may also be used together to supply the waste cathode active material mixture.

A reaction gas for converting the waste cathode active material mixture into a preliminary precursor may be supplied into the reactor body 110 through the reaction gas passage 102 connected to the reactor lower portion 120. According to exemplary embodiments, the reaction gas includes a reducing gas, for example, hydrogen (H₂) may be supplied.

The reaction gas may be injected into the reactor body 110 through the first injection columns 60. Since the reaction gas is supplied from the lower portion of the fluidized bed reactor 100 and contacts the waste cathode active material mixture, the waste cathode active material mixture may react with the reaction gas while moving to the reactor upper portion 130 to be converted into the preliminary precursor.

The dead zone formed at the outer portion or the peripheral portion of the base plate 50 may be removed by the gas (e.g., the reaction gas and/or the carrier gas) injected through the second injection column 70. In addition, whirl may be formed by the gas, thereby inducing a uniform reaction between the waste cathode active material and the reaction gas.

In one embodiment, the reaction gas passage 102 which supplies the reaction gas and/or the carrier gas to the first injection column 60 and the gas passage 104 which supplies the gas to the second injection column 70 may be distinguished from each other. Accordingly, since the gas flow according to the second injection column 70 may be artificially and variably adjusted, optimization of the gas flow rate for eliminating the dead zone may be easily achieved.

In some embodiments, the lithium-transition metal oxide may be reduced by the hydrogen gas to produce, for example, lithium hydroxide (LiOH), a preliminary lithium precursor including the lithium oxide (e.g., Li₂O), and a transition metal or a transition metal oxide. For example, Ni, Co, NiO, CoO and MnO may be produced together with the preliminary lithium precursor by a reduction reaction.

The reduction reaction in the reactor body 110 may be performed at about 400°C to 700°C, and preferably 450°C to 550°C. Within the above reaction temperature range, the reduction reaction may be facilitated without causing re-aggregation or recombination of the preliminary lithium precursor and the transition metal/transition metal oxide.

In some embodiments, a carrier gas may also be supplied together with the reaction gas from the reactor lower portion 120 through the reaction gas passage 102. For example, the carrier gas may include an inert gas such as nitrogen (N₂), argon (Ar), etc. The carrier gas may also be supplied by injecting through the first injection columns 60 of the dispersion plate to facilitate the formation of fluidized bed. For example, the formation of whirl through the carrier gas may be facilitated.

The preliminary precursor mixture 90 including preliminary lithium precursor particles 94 and transition metal-containing particles 92 (e.g., the transition metal or transition metal oxide) may be formed within the reactor body 110. The preliminary lithium precursor particles 94 may include, for example, lithium hydroxide, lithium oxide and/or lithium carbonate (Li carbonate).

In one embodiment, the transition metal-containing particles 92 including nickel, cobalt or manganese are relatively heavier than the preliminary lithium precursor particles 94, such that the preliminary lithium precursor particles 94 may be first collected through outlets 160a and 160b.

In one embodiment, the preliminary lithium precursor particles 94 may be discharged through a first outlet 160a connected to the reactor upper portion 130. In this case, selective recovery of the preliminary lithium precursor particles 94 according to the weight gradient may be facilitated.

In one embodiment, the preliminary precursor mixture 90 including the preliminary lithium precursor particles 94 and the transition metal-containing particles 92 may be collected through a second outlet 160b connected to the reactor body 110. In this case, the preliminary precursor mixture 90 may be directly recovered in a fluidized bed forming region, thereby increasing the yield.

In one embodiment, the preliminary precursor mixture 90 may be collected together through the first and second outlets 160a and 160b.

The preliminary lithium precursor particles 94 collected through the outlets 160a and 160b may be recovered as a lithium precursor (e.g., process S30).

In some embodiments, the preliminary lithium precursor particles 94 may be washed with water. Through the water washing treatment, the preliminary lithium precursor particles in the form of lithium hydroxide (LiOH) may be substantially dissolved in water and separated from the transition metal precursor to be recovered first. A lithium precursor substantially composed of lithium hydroxide may be obtained through a crystallization process, etc. of the lithium hydroxide dissolved in water.

In one embodiment, the preliminary lithium precursor particles in the form of lithium oxide and lithium carbonate may be substantially removed through the water washing treatment. In one embodiment, the preliminary lithium precursor particles in the form of lithium oxide and lithium carbonate may be at least partially converted into lithium hydroxide through the water washing treatment.

In some embodiments, lithium carbonate (e.g., Li₂CO₃) may be obtained as a lithium precursor by reacting the preliminary lithium precursor particles 94 with a carbon-containing gas such as carbon monoxide (CO), or carbon dioxide (CO₂), etc. A crystallized lithium precursor may be obtained through a reaction with the carbon-containing gas. For example, lithium carbonate may be collected by injecting the carbon-containing gas together during the water washing treatment.

In some embodiments, a transition metal precursor may be obtained from the collected transition metal-containing particles 92 (e.g., process S40).

For example, after collecting the preliminary lithium precursor particles 94 through the outlets 160a and 160b, the transition metal-containing particles 92 may be recovered. Thereafter, the transition metal-containing particles 92 may be treated with an acid solution to form precursors in the form of acid salts of each transition metal.

In one embodiment, sulfuric acid may be used as the acid solution. In this case, NiSO₄, MnSO₄ and CoSO₄ may be recovered as the transition metal precursor, respectively.

As described above, the lithium precursor is collected through a dry process, and then the transition metal precursors are selectively extracted using the acid solution, such that purity and selectivity of the respective metal precursors may be improved, and a load of the wet process may be decreased, thereby reducing an increase in wastewater and byproducts.

## Claims

1. A fluidized bed reactor comprising:
a reactor body;
a dispersion plate which is coupled to a lower portion of the reactor body, and comprises a base plate and first injection columns protruding from an upper surface of the base plate; and
a second injection column which is adjacent to a circumference of the dispersion plate, and is configured to inject a gas so as to form a gas flow which rotates along an inner surface of the reactor body.

2. The fluidized bed reactor according to claim 1, wherein the gas flow formed by the second injection column rotates in unidirection.

3. The fluidized bed reactor according to claim 1 or 2, wherein a plurality of the second injection columns are disposed spaced apart along the circumference of the dispersion plate.

4. The fluidized bed reactor according to claim 3, wherein if a length of the circumference of the dispersion plate is defined as L, and the number of the second injection columns is defined as n,
the second injection columns are disposed spaced apart from each other at an interval of L/(n+1) to L/(n-1).

5. The fluidized bed reactor according to one of claims 1 to 4, further comprising a gas passage configured to supply the gas to the second injection column.

6. The fluidized bed reactor according to claim 5, wherein the second injection column comprises:
a gas reception part configured to receive the gas from the gas passage, and
a second injection port configured to inject the gas so that the gas is circulated in a direction parallel to the upper surface of the base plate at an inside of the reactor.

7. The fluidized bed reactor according to claim 6, wherein the gas reception part is in contact with the upper surface of the base plate.

8. The fluidized bed reactor according to claim 6, wherein the gas reception part is in contact with the inner surface of the reactor body.

9. The fluidized bed reactor according to claim 8, wherein the second injection port is parallel to a tangential direction of the dispersion plate.

10. The fluidized bed reactor according to claim 8, wherein the second injection port is inclined toward the inner surface of the reactor body.

11. The fluidized bed reactor according to one of claims 1 to 10, wherein the first injection column comprises a column body which extends from the upper surface of the base plate, a cap part which covers an upper portion of the column body, and a first injection port which penetrates the column body.

12. The fluidized bed reactor according to claim 11, wherein the first injection port is inclined toward the upper surface of the base plate.

13. The fluidized bed reactor according to one of claims 1 to 12, wherein the first injection columns are arranged at a predetermined pitch or in a predetermined grid shape.

14. The fluidized bed reactor according to one of claims 1 to 13, wherein the reactor body further comprises a reaction gas passage configured to supply a reaction gas from a bottom portion of the base plate.

15. A method for recovering an active metal of a lithium secondary battery, comprising:
preparing a waste cathode active material mixture obtained from a waste cathode of the lithium secondary battery;
reacting the waste cathode active material mixture in the fluidized bed reactor of one of claims 1 to 14 to form a preliminary precursor mixture; and
selectively recovering a lithium precursor from the preliminary precursor mixture.
